# EUROPEAN PATENT APPLICATION

(11) **EP 4 845 126 A2**
(43) Date of publication of application: **25.11.2026**
(21) Application number: 26210404.5
(22) Date of filing: 24.03.2023
(51) Int. Cl.: H04L 67/12

(54) **PIN CONFIGURATION, MANAGEMENT AND APPLICATION SERVICE DISCOVERY**

(30) Priority: 28.03.2022 US 202263324493 P
(62) Document number(s) of the earlier application(s) in accordance with Art. 76 EPC: 23719526.8 / 4 500 834
(71) Applicant: InterDigital Patent Holdings, Inc., Wilmington, DE 19809 (US)
(72) Inventor: PURKAYASTHA, Debashish, Pennsylvania, 19428 (US); NINGLEKHU, Jiwan, Pennsylvania, 19468 (US); GAZDA, Robert, Pennsylvania, 19428 (US); ABBAS, Taimoor, Québec, H2A 3G4 (CA); SETHI, Anuj, Québec, H3A 3G4 (CA); AHMAD, Saad, Québec, H3A 3G4 (CA); SHI, Xiaoyan, Oregon, 97035 (US); STARSINIC, Michael, Pennsylvania, 19428 (US)
(74) Representative: AWA Sweden AB

(57) **Abstract**

A first wireless transmit/receive unit (WTRU) receives a join request from a personal internet of things (IoT) network (PIN) element to join a PIN associated with the first WTRU. The join request indicates a PIN identifier, a PIN element identifier, and authorization information. When the PIN element is authorized to join the PIN, the first WTRU sends an approval indication to the PIN element. The first WTRU sends a first message to a PIN server indicating that the PIN element has joined the PIN, and sends a second message to a second WTRU to inform the second WTRU about the PIN element joining the PIN, the second message indicating the PIN element identifier.

## Description

### CROSS-REFERENCE TO RELATED APPLICATIONS

This application claims priority to United States Provisional Patent Application No. 63/324,493 filed in the United States of America on March 28, 2022, the entire contents of each of which are incorporated herein by reference.

### BACKGROUND

The Internet is a global system of interconnected computers and computer networks that employ a standard Internet protocol suite (e.g., the Transmission Control Protocol (TCP) and Internet Protocol (IP)) to communicate with each other. The Internet of Things (IoT) is based on the concept that everyday objects, aside from computers and computer networks, can be readable, recognizable, locatable, addressable, and controllable via an loT communications network.

The development of loT devices is driven by a number of market trends. For example, governments' strategic investments in smart grids and support for future consumption, such as for electric vehicles and public charging stations, are driven by increasing energy costs. development for remote/connected health care and fitness services are driven by increasing health care costs and aging populations. Development for new "smart" services, including consolidation by service providers marketing 'N' play (e.g., data, voice, video, security, energy management, etc.) and expanding home networks, is driven by technological revolution in the home. To reduce operational costs for enterprise facilities, buildings are getting smarter and more convenient.

The loT play a key role in a number of applications. For example, in the fields of smart grids and energy management, utility companies can optimize delivery of energy to homes and businesses while customers can better monitor energy usage. In the field of home and building automation, smart homes and buildings can exert centralized control over practically any device or system in the home or office, from appliances to plug-in electric vehicle (PEV) security systems. In the field of asset tracking, the locations of high-value equipment, patients, vehicles, etc. can be precisely tracked by enterprises, hospitals, factories, and other large organizations. Finally, in the area of health and wellness, people can track the progress of their fitness routines and doctors can remotely monitor patients' health.

### SUMMARY

A WTRU may receive a first message from a local client device in a local network. The local network may comprise a personal internet of things (IoT) network (PIN). The first message may comprise one or more criteria associated with an application server. The first message may comprise information associated with a registration request. The information associated with the registration request may comprise one or more of a personal internet of things (IoT) network (PIN) application server (PAS) name, a uniform resource locator (URL), a PIN element identifier (PE-ID), or capability information. The one or more criteria may comprise one or more of a PIN Application Server (PAS) name, PIN element identifier (PE-ID), location information, provider information, or capability information. The WTRU may determine whether any local application servers in the local network satisfies the one or more criteria. If one or more local application servers satisfy the one or more criteria, the WTRU may send a second message to the local client device. , The one or more local application servers may comprise a PIN application server (PAS) in the PIN. The second message may comprise information for accessing the one or more local application servers in the local network. If no local application servers in the local network satisfy the one or more criteria, the WTRU may send a third message to a central application management server. The third message may comprise the one or more criteria.

If no local application servers in the local network satisfy the one or more criteria, the WTRU may receive a fourth message from the central application management server indicating one or more non-local application servers that satisfy the one or more criteria. The one or more non-local application servers may be located outside of the PIN. The WTRU may be configured as a local PIN application manager (LPAM) for the PIN. If no local application servers in the local network satisfy the one or more criteria, the WTRU may send a fifth message to the local client device. The fifth message to the local client device may comprise information for accessing the one or more non-local application servers.

The WTRU may accept the registration request. The WTRU may send an update message to the central application management server. The update message may comprise the information associated with the registration request. The WTRU may send a registration accept message to the local client device in response to the acceptance of the registration request. The WTRU may update the network in response to acceptance of the registration request. The update may indicate one or more Domain Name System (DNS) rules or classifier information associated with routing traffic to the one or more local application servers. The information for accessing the one or more local or non-local application servers may comprise one or more of a personal internet of things (IoT) network (PIN) application server (PAS) uniform resource locator (URL) or a PAS capability.

The WTRU may send a message to a personal internet of things (IoT) network (PIN) configuration server (PCS) comprising information associated with creating a PIN. The PIN may be associated with the one or more local application servers. The WTRU may receive a message from the PCS comprising a PIN identifier (PIN ID) and/or a PIN element identifier (PE-ID). The WTRU may send a message to a PIN configuration manager (PCM) requesting to create a PIN. The message to the PCM may comprise one or more of PIN ID, PE-ID, PIN type and authorization information. The WTRU may receive a message comprising a PIN ID and one or more supported application services in response to the WTRU sending a message requesting PCS for available PINs.

### BRIEF DESCRIPTION OF THE DRAWINGS

FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A according to an embodiment.
FIG. 1C is a system diagram illustrating an example radio access network (RAN) and an example core network (CN) that may be used within the communications system illustrated in FIG. 1A according to an embodiment.
FIG. 1D is a system diagram illustrating a further example RAN and a further example CN that may be used within the communications system illustrated in FIG. 1A according to an embodiment.
FIG. 2 is a system diagram illustrating an example of a Personal Internet of Things (IoT) Network (PIN) in a home automation environment.
FIG. 3 is a system diagram illustrating an example of a Personal Internet of Things (IoT) Network (PIN) in an environment of one or more wearable devices.
FIG. 4 is an architecture diagram illustrating an example of a PIN architecture.
FIG. 5 is a process diagram illustrating an example discovery mode for providing Proximity Services (ProSe) discovery.
FIG. 6 is a process diagram illustrating an example discovery mode for providing Proximity Services (ProSe) discovery.
FIG. 7 is a diagram illustrating examples of PIN application functions.
FIG. 8 is a flow diagram illustrating an example process for creating a PIN.
FIG. 9 is a flow diagram illustrating an example process for PIN discovery.
FIG. 10 is a flow diagram illustrating an example process for joining a PIN.
FIG. 11 is a flow diagram illustrating an example process for starting a PIN.
FIG. 12 is a diagram illustrating an example PIN application Client (PAC) and an example PIN application Server (PAS).
FIG. 13 is an exemplary diagram illustrating a PIN Element with Management Capability (PEMC), a PIN Application Client (PAC), a PIN Application Server (PAS), a PIN Configuration Manager (PCM), a Local PIN Application Manager (LPAM), a PIN Client (PC), and a Central PIN Application Manager (CPAM).
FIG. 14 is a diagram illustrating an example PAS registry and example discovery procedures.
FIG. 15 is a diagram illustrating an example architecture of a PIN application framework.

### DETAILED DESCRIPTION OF THE INVENTION

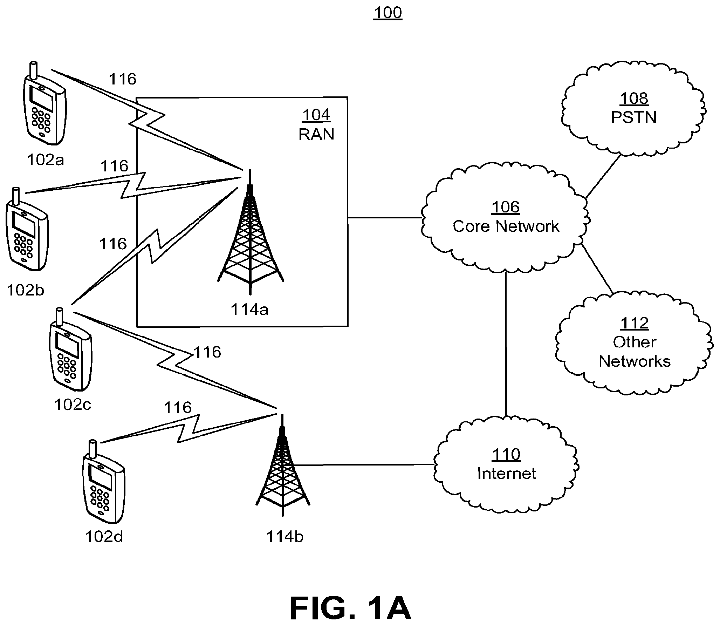

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a WTRU.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

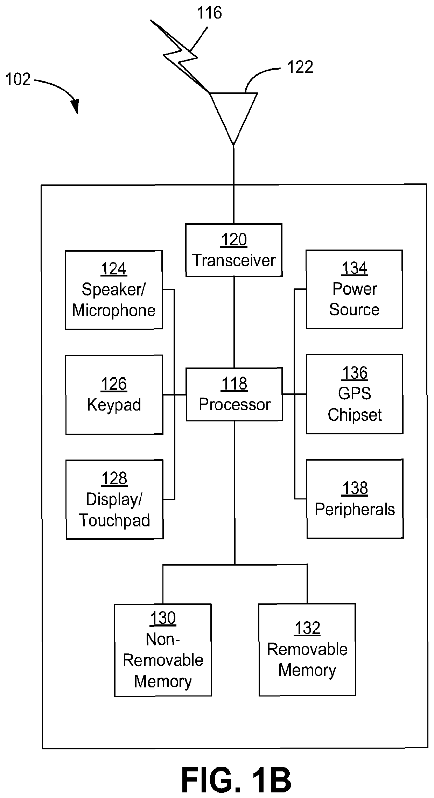

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit 139 to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

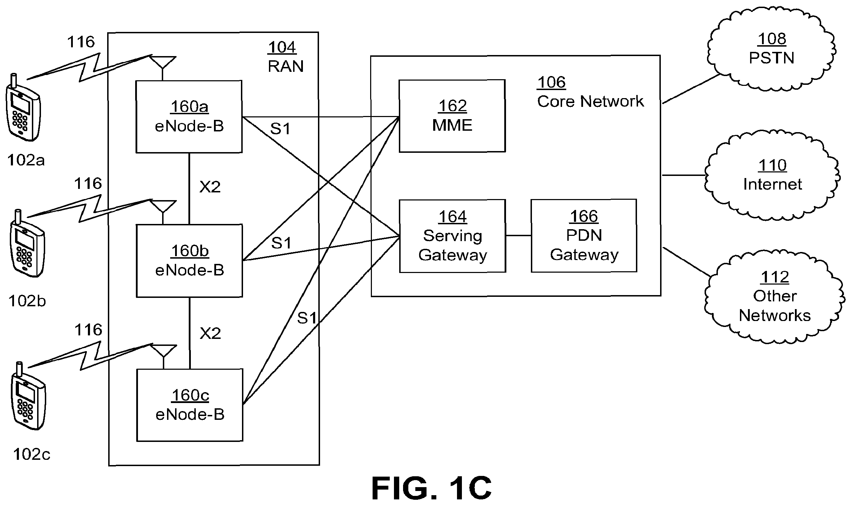

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

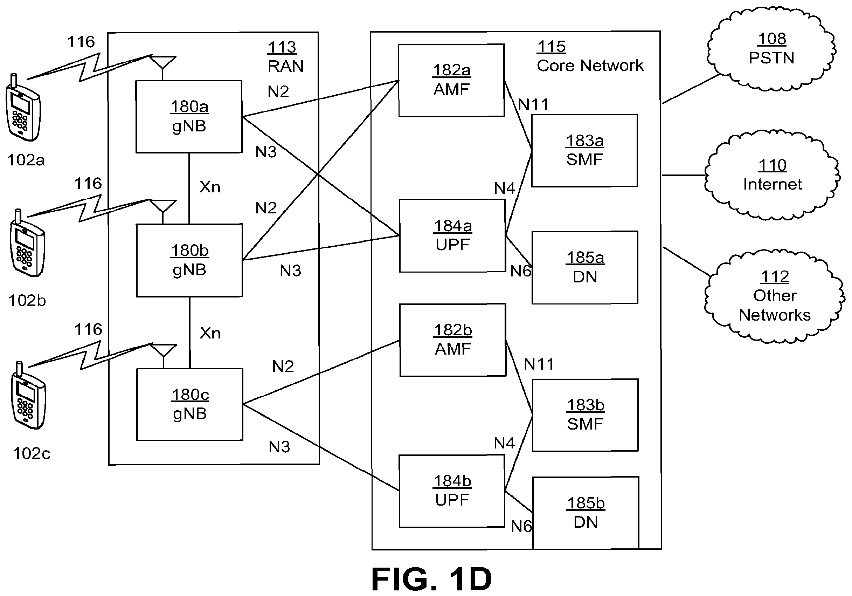

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating WTRU IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-ab, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

A Internet of Things (IoT) feature have been designed for devices that communicate using a traditional cellular network. Devices with loT capabilities may require enhanced power consuming performance and increased the network efficiency for bulk operations.

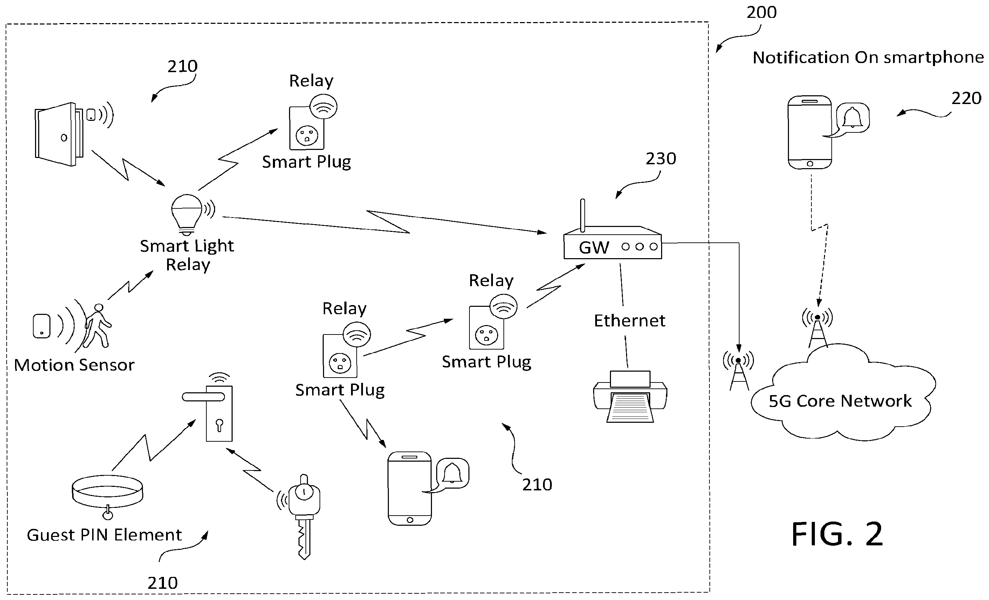

FIG. 2 is an example diagram of a Personal Internet of Things (IoT) Network (PIN) 200 in a home automation environment. When multiple loT devices 210 are deployed in a private environment, the WTRU(s) 220 with IoT capabilities can be organized in a Personal IoT Network (PIN). For example, in home environment, security sensor, smart light, smart plug, printer, cellphone, and the like, are managed by a residential gateway and communicate with each other. One or more devices 210 in a home may constitute a PIN. Each of the devices 210 is called a PIN element or PIN device. In one example, different PIN elements may have different capabilities. As an example, a residential gateway can be a PIN Element with Gateway Capability (PIN GW) 230 to provide connections between PIN elements and connections between 5G network and PIN Elements. A PIN Element with Management Capability (PIN Mgmt) may be a PIN Element that provides a means for an authorized administrator to configure and manage a PIN. As an example, a residential gateway which acts as a PIN GW 230 may support PIN management function and/or may also act as a PIN Mgmt. One or more PIN devices or PIN elements may be implemented in a WTRU. The terms PIN device, PIN element, WTRU, PIN client, and/or the like may be used interchangeably herein.

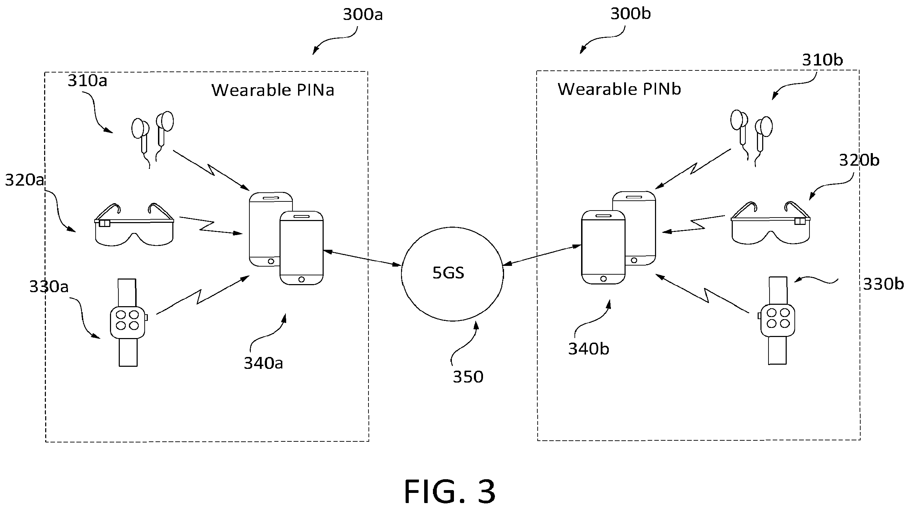

FIG. 3 is an example diagram of a PIN in a wearable devices environment. Wearable devices may constitute a type of PIN, for example, wearable PINa 300a or wearable PINb 300b. For example, a smart phone may act as a PIN GW as well as a PIN Mgmt. A smart watch 330a or 330b, VR/AR glass 320a or 320b, and/or airpod 310a or 310b, may, for example, communicate with each other in the PIN and/or with other WTRUs 340a or 340b via 5G network 350.

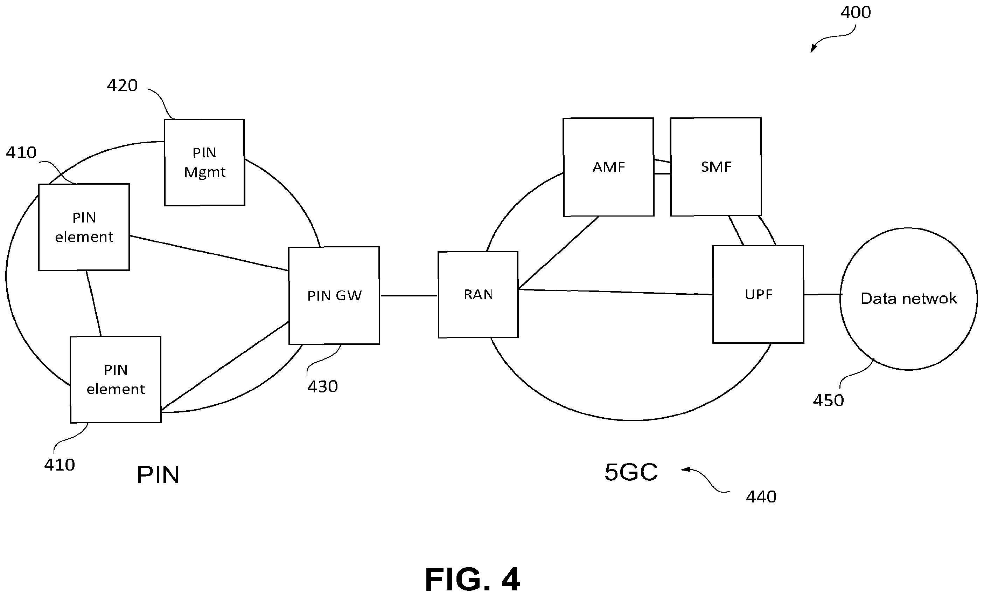

FIG. 4 shows an example PIN network architecture 400. A PIN may include one or more of a PIN Element (PE) 410, a PIN Management (PIN Mgmt) 420 and/or a PIN Gateway (PIN GW) 430. A PIN element may be a WTRU or any one of a number of different non-3GPP devices that have an ability to communicate within a PIN. A PIN management device may be a PIN Element with capability to manage the PIN. A PIN GW may be a PIN Element that has the ability to provide connectivity to and from the 5G network for one or more other PIN Elements.

PIN elements 410 may communicate with each other through a number of methods, such as through a PIN GW 430. PIN elements may also communicate with each other directly. Additionally, PIN elements may communicate with the 5G system to obtain 5G services. PIN elements may also communicate with a data network 450 via the 5G core network 440. One or more PIN elements with management capabilities may be a WTRU. One or more PIN elements with gateway capabilities may be a WTRU. Communications within the PIN may be carried out using one or more of a number of non-3GPP communications such as WiFi, Bluetooth, and the like.

According to one exemplary aspect, the disclosure relates to a Wireless Transmit/Receive Unit (WTRU) that includes a processor and memory, that is configured to join, manage, or otherwise support a Personal loT Network (PIN). The PIN may be a network of devices that communicate in order to utilize one or more shared services or applications. For example, a PIN could be formed in a home environment to support smart home-type applications and could include various devices such as security systems, smart lights, smart plugs, home assistants, cell phones, etc. The PIN device could receive connectivity through one or more common gateways.

In an example, one or more PIN device may be implemented in a WTRU. The WTRU may be configured to transmit an identification information to a Personal Internet of Things Network (PIN) Configuration Server (PCS). In an exemplary aspect the WTRU receives a configuration information and an authorization information from the PCS, and transmits information based on the identification, configuration, and/or authorization information to a PIN Configuration Manager (PCM).

In an example of the disclosure, the WTRU receives a Personal Internet of Things Network (PIN) information from the PCM and initiates a PIN-related control procedure based on the configuration information, authorization information, and/or PIN information.

One or more devices may participate and/or provide support for PIN management functions for client devices. For example, a PCS may communicate with a PIN Client (PC) located at the WTRU. A PIN Gateway Manager (PGM) may provide connectivity to one or more application servers that provide services and application to support PIN operation. For example, the PC (e.g., at the WTRU) may obtain configuration and authorization information from the PCS to create a PIN or join a PIN. The PC may coordinate with a PCM to start, join, create, or otherwise manage a PIN.

One or more devices in a PIN may be configured to facilitate Application Server discovery for the PIN. For example, a local registry may be maintained by a PIN device, such as a Local PIN Application Manager (LPAM). The LPAM may be implanted at the PCS and/or the PCS may be in communication with a device implemented the LPAM. PIN devices may communicate with a device external to the PIN to receive information related to a global registry (e.g., a larger and/or more robust list) of PIN applications. The global registry may be maintained by a Central PIN Application Manager. In an example, a PC (e.g., at a WTRU) may obtain information maintained by the LPAM from the PCS. For instance, registration and query messages, which may be user-triggered, may be sent to the LPAM by the PC. If the LPAM/PCS is unable to obtain the information needed to respond to the registration and query messages, the LPAM/PCS may query the CPAM to obtain the information and provide it to the PC.

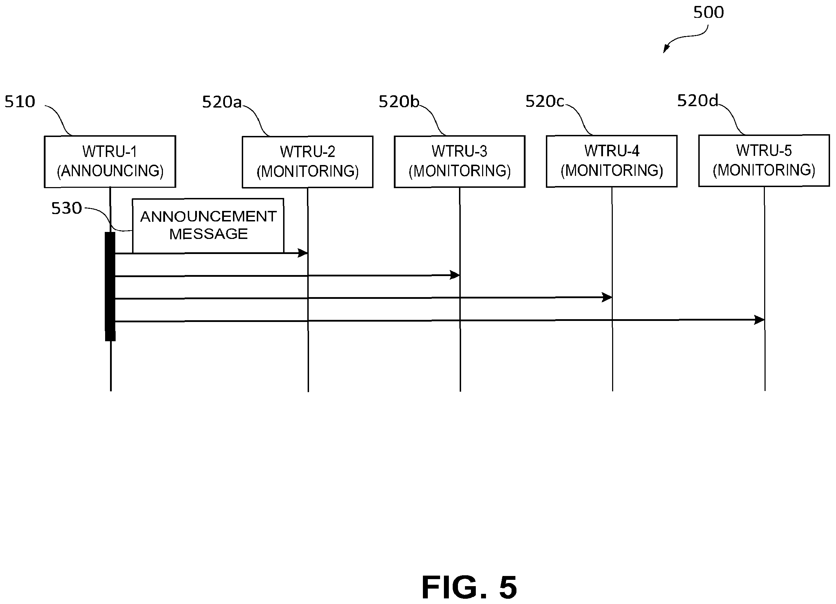

FIG. 5 is a diagram of an example proximity services (ProSe) direct discovery mode 500. ProSe may include services that can be provided (e.g., by the 3GPP system) based on the relative locations of one WTRU 510 to one or more other WTRUs 520a, 520b, 520c, 520d, etc.. To provide ProSe, a WTRU may perform a ProSe discovery procedure to discover one or more other WTRUs (e.g., such as WTRU 520a, 520b, 520c, and/or 520d) in its proximity. A WTRU 510 (for example an announcing WTRU) may broadcast one or more announcement messages 530 with a ProSe code. The ProSe code may be associated with an announcing WTRU's ID and/or associated with service provided by the announcing WTRU 510. The one or more other WTRUs (e.g., such as WTRU 520a, 520b, 520c, 520d) who receive an announcement message (for example a Monitoring WTRU) may determine that the it is in within a certain proximity to the announcing WTRU 510.

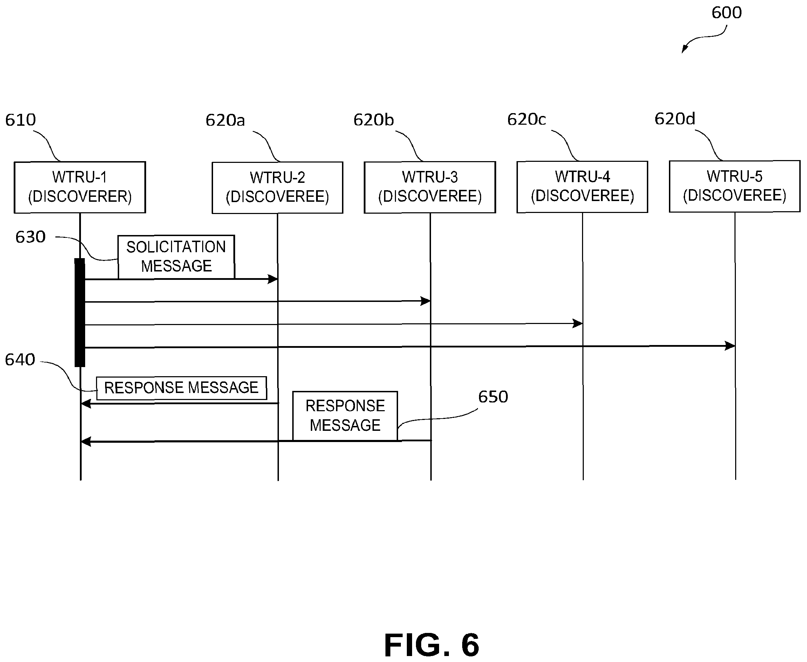

FIG. 6 is a diagram of an example ProSe direct discovery mode 600. A WTRU 610 (for example a discoverer WTRU) may broadcast one or more solicitation request messages 630 using a ProSe Query code which may be associated with the ID of the WTRU 610. For example, the WTRU's ID may be discovered or associated with a ProSe service to be discovered. One or more other WTRUs who receive the solicitation request message (for example a discoveree WTRU 620a, 620b, 620c, 620d, etc.) may respond to the request with a ProSe response code. For example, one or more of the discoveree WTRUs 620a, 620b, 620c, 620d may send a response message 640 with a ProSe response code in response to the one or more solicitation request messages 630. The ProSe response code may be associated with the discoveree WTRU's ID and/or associated with a ProSe service. The ProSe service may be provided by the discoveree WTRU (e.g., such as the discoveree WTRU 620a, 620b, 620c, or 620d). The discoverer WTRU 610 may determine that it is within a certain proximity of the discoveree WTRU (e.g., such as the discoveree WTRU 620a, 620b, 620c, or 620d).

A discovery mode may be used to perform Group discovery. An example of Group discovery is the discovery of one or more WTRUs which may belong to a certain group. A discovery mode may be used to perform WTRU-to-Network relay discovery. An example of WTRU-to-Network relay discovery is the discovery of a WTRU-to-Network relay which may provide a connection with 5G network.

For Group discovery, a discovery message (e.g., such as an Announcement message, a Solicitation Request message 630, and/or a Response message 640, 650) may include a Group ID. For WTRU-to-Network relay discovery, the discovery message may use a Relay Service Code instead of a ProSe code to indicate a WTRU-to-Network relay service.

A PIN network may be managed by a MNO (Mobile network operator) to support Application Services (e.g. Gaming, Remote Health, and the like) provided by one or more Managed Service providers. Users (for example in a home, enterprise or any location) may set up a PIN to operate the Application Service.

Application service providers may supply one or more PIN elements, which users may buy off the shelf. Each PIN element may be a 3GPP device or a non-3GPP device. In an example, a PIN element may receive configuration information through an application level information exchange mechanism prior to becoming part of a PIN and/or being managed by an MNO. PIN elements may be non-3GPP devices, which may use, for example, BT, WiFi technology, and/or other like technologies.

A PIN may support various Application Services. An example way for a PIN to support various Application services is for the various Application Clients and/or Application Server to run on one or more PIN Elements. A PIN may have a distributed and diverse environment, and may or may not completely rely on network level methods to discover and connect to Application servers. A PE may need to determine the application level configuration that may be used for PIN management functions, such as, for example, Create, Discover, Join, and/or Start a PIN. As an example, when a PE wants to create a PIN in a location where no PIN exists, an application level configuration for Create may need to be determined. As an example, when a PE wants to discover whether a PIN already exists in a location and what application service it provides an application level configuration for Discover may need to be determined. For example, when a PE wants to join an existing PIN, an application level configuration for Join may need to be determined. An application level configuration for Start may need to be determine when, for example, a PIN is to be started, which may occur when, for example, a PIN has been created but may not yet be operational. A PE may, for example, choose to make the PIN operational at a certain time. In certain circumstances such as, for example, registering an Application Server or inputting a query for an Application server, it may be desirable to determine the means to facilitate Application Server discovery using Application level mechanism. It may also be desirable to determine the architectural requirements for an Application Framework to support PIN activities, such as, for example activites related to PIN Management, Application server discovery, and the like. A solution to PIN management may be employing Application function PCS (PIN Configuration Server), PC (PIN Client), PCM (PIN Configuration Manage), and/or PGM (PIN Gateway Manager). A solution to PIN management may be that PC obtains configuration and authorization information from PCS to create and join a PIN. A solution to PIN management may be that PC coordinates with PCM to start, join or create a PIN. A solution to PIN Application Server discovery may be that a local registry LPAM (Local PIN Application Manager) and a global registry CPAM (Central PIN Application Manager) is proposed. A solution to PIN Application Server discovery may be that the PC obtains LPAM information from PCS. A solution to PIN Application Server discovery may be that a User triggered Registration and query message may be sent to LPAM by PC. A solution to PIN Application Server discovery may be that if information not found in LPAM, it may be obtained from CPAM.

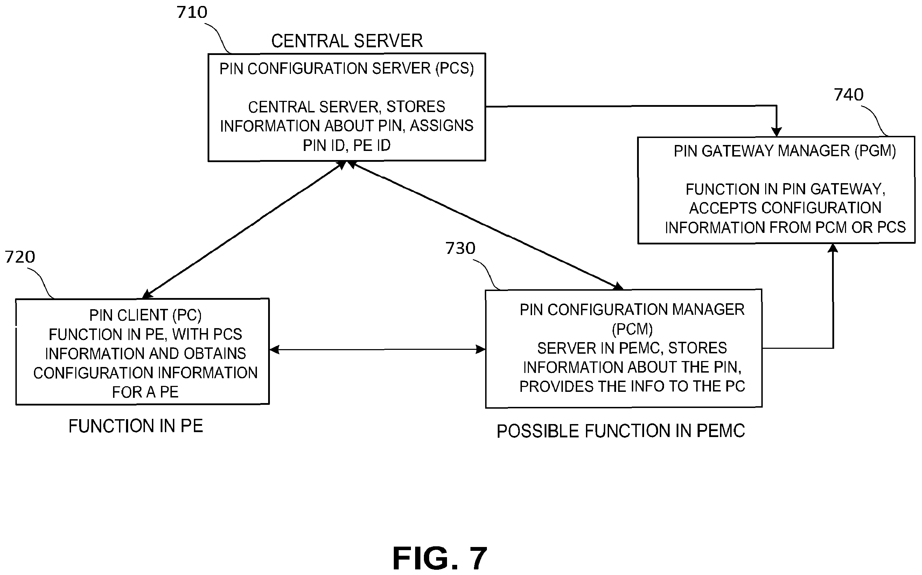

FIG. 7 is an exemplary diagram that illustrates examples of PIN application functions. For example, a PIN Configuration Server (PCS) 710 may be an application function that facilitates a PIN management procedure. A PCS 710 may be a central entity which may have knowledge about one or more PINs in the network. A PIN Client (PC) 720 may be an example of an application function that facilitates a PIN management procedure. A PC 720 may be a client in a PIN Element, which may obtain information from PCS to enable PIN management operations. A PIN Configuration Manager (PCM) 730 may be an example of an application function that facilitates PIN management procedure. A PCM 730 may be an application function associated with the PIN Element with management capability. The PCM 730 may keep track of PIN management locally for a PIN. A PIN Gateway Manager (PGM) 740 may be aAn example of an application function that facilitates PIN management procedure may be. A PGM 740 may be an application function in PE with gateway capability. The PCS 710 may, for example, maintain information about one or more PINs across the MNO network. The PCS 710 may maintain information including for example, information about authorization and policy related information for a PE, such as if the PE is allowed to create a PIN, allowed to join a PIN, allowed for a specific application service, and the like. The PCS 710 may maintain information about IDs that are assigned to a PE and/or may authorize the PE to join a PIN. The PCS 710 may maintain information about available PINs, its PIN ID in a certain location, and/or allowed Application service. The PCS 710 may maintain information about a PCM 730 for each PIN, and how to reach a PCM 730 for a specific PIN ID. The PC 720 may be a function in a PE, and may be provisioned with PCS 710 information. The PC 720 may provide the function of obtaining information about an available PIN, PIN ID, available services, and/or PCM 730 information for a PIN from the PCS 710. The PC 720 may provide the function of obtaining Application level PE-ID in order to join or create a PIN from the PCS 710. Additionally, the PC 720 may provide the function of assisting the PE in executing and/or creating a PIN, and/or joining a PIN with PCS 710 and the PCM 730. A PCM 730 may be a local PIN Management function, and may be part of a PEMC. A PCM 730 may maintain local PIN information, such as PIN ID, available PEs and PE-ID, PEs which joined a PIN, authorization information, policy information, and the like. The PCM 730 may also verify, update, and/or synchronize information about a local PIN with PCS. A PGM 740 may be a function that may be available with the PE which may be gateway capable. The PGM 740 may obtain and implement gateway configuration from the PCM 730 and/or the PCS 710. A PIN may not exist in a location where a user may want to start a PIN for a specific Application Service. In an example scenario, the user may own a PE and want to create a PIN using the PE. The PE owned by the user may be a WTRU (e.g., a 3GPP WTRU) with PEMC capability. The PE owned by the user may also be a non-3GPP device without PEMC capability.

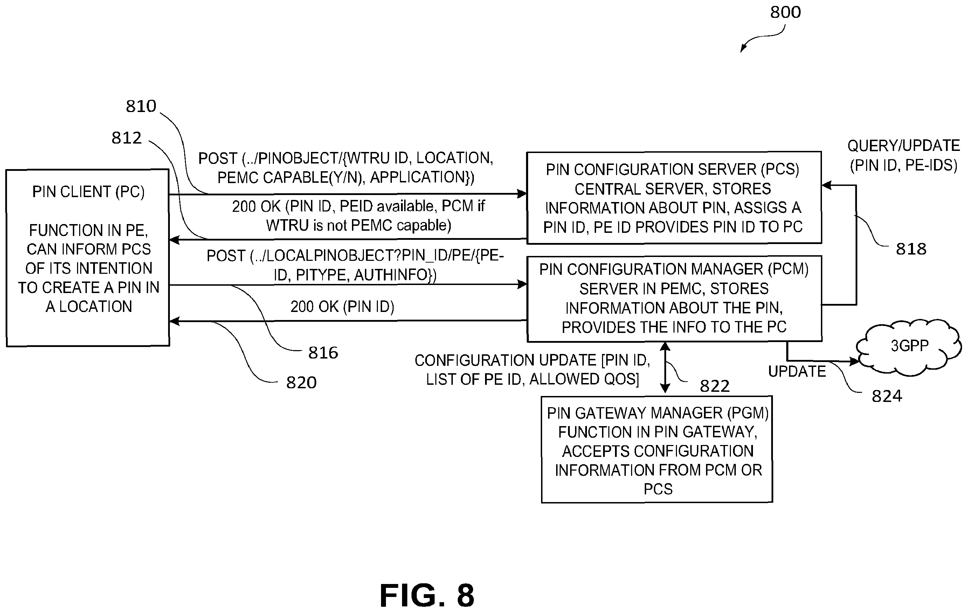

FIG. 8 is an diagram illustrating an example process 800 for creating a PIN Create, which results in the creation of a PIN. At 810, the PIN Client (PC) may indicate to PCS an intention and/or capability to create a PIN, by, for example, providing information such as user ID, device ID, location information, whether the PE is PEMC capable, the desired Application Service on the PIN, and/or other types of similar or related information. At 812, the PCS may authenticate and authorize the user, and may create a PIN ID and/or PE-ID. The PCS may determine the suitable PCM function based on the capability of the PE. At 814, the PCS may respond by providing a PIN-ID and/or PE-ID of the device. The PCS may also include a PCM information in its response. At 816, after obtaining information from the PCS, PC may send a Create request to PCM with information such as, for example, PIN ID, PE-ID, PIN Type, and/or Authorization information. At 818, the PCM may verify with the PCS about the newly created PIN ID. The PCM may obtain information from the PCS relating to what PEs may be required to support the application service. The PCM may send, at 818, a Query message to the PCS, which may include the PIN ID. The PCS may return one or more PE-IDs that may be used to create the PIN and support the desired service. At 820, the PCM may determine whether the required PEs are available and are allowed to join. If, for example, the PCM determines, at 820, that the required Pes are available and allowed to join, the PCM may determine that the PIN can be created and inform the PC about the successful creation of the PIN. If, for example, the PCM determines, at 820, that the PEs are not available and/or not allowed to join, the PCM may send an indication such as, for example, ERROR or FAIL PIN Creation. The PCM may also update the PCS about the one or more PE-IDs that are available to join or that have already joined. At 822, the PCM may send a Configuration Update message to the PGM, which may include information such as, for example, PIN ID, one or more PE-IDs, and/or one or more allowed QOSs. At 824, the PCM may update the 3GPP network with PIN Creation details.

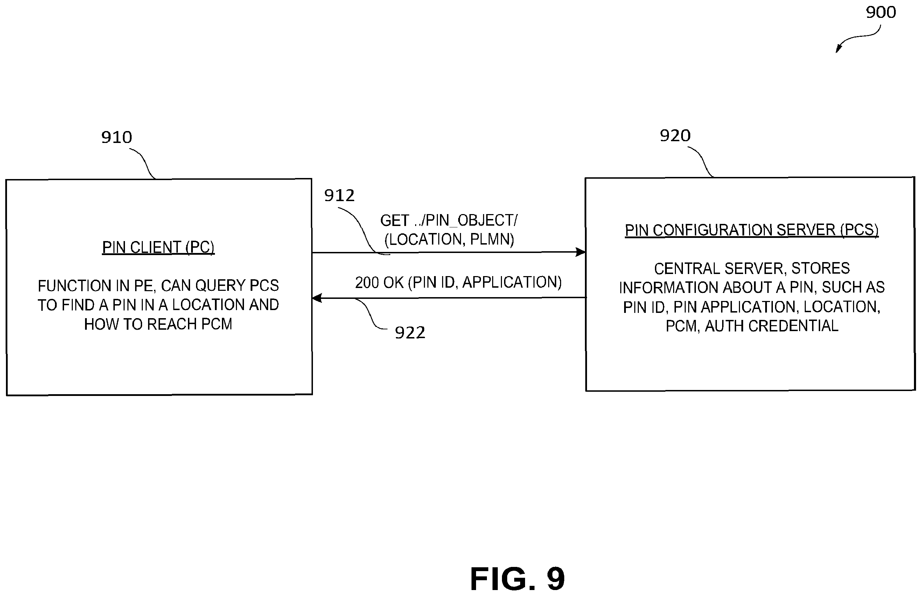

FIG. 9 is a diagram illustrating an example process 900 for PIN Discovery. For example, a user with a PE may join a PIN in order to use an application service. The user may discover if a PIN is available in a specific location that offers the desired application service. A PE may be a 3GPP or a non-3GPP device. The PE may or may not perform network level discovery. An application level service discovery may allow uniform discovery methods for 3GPP and/or non-3GPP PE. The PC 910 may query the PCS 920 for available PINs with location information and/or PLMN information. For example, the PC 910 may send, at 912, a query message to the PCS 920. The query message may indicate the location information and/or PLMN information. The PCS 920 may check its database to determine the available PINs at a specific location. The PCS 920 may respond, at 922, to the PC 910 with a list of available PINs in the specific location by, for example, sending PIN ID and supported application services. The PC 910 may choose which PIN it wants to join to use a specific application service.

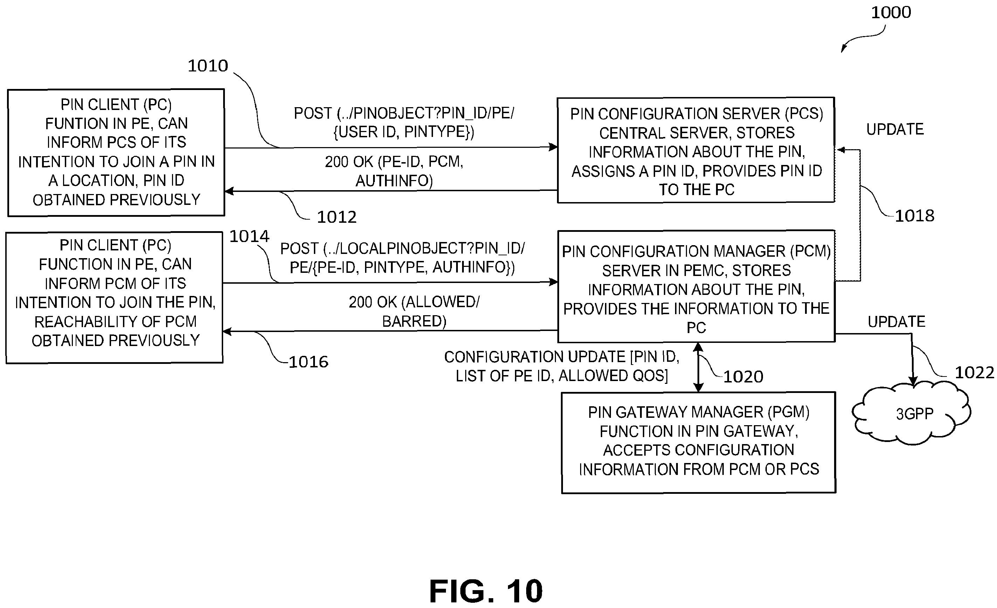

FIG. 10 is a diagram illustrating an example of the steps 1000 involved in PIN Join. After a PIN has been discovered by a PE, joining the PIN may be a next step. Once PE determines the PIN it will join, the PE may obtain authorization from the PCS to join the PIN. For example, at 1010, the PC may send a Join request by sending information including the PIN ID of the PIN it wants to join, a user ID, and/or a PIN type. At 1012, the PCS may authenticate and/or authorize the Join request sent by the PC based on a user ID and/or PIN type. If the PCS determines that the Join request is allowed, the PCS may respond, at 1012, by sending to the PC a messsage such as, for example, OK, which may include information such as the PE-ID assigned to the PE by PCS, PCM information, local PCM for PIN management, and/or Authorization information for Local PIN. At 1014, the PC may contact the PCM and inform the PCM of its intention to join a PIN. For example, the PC may send, at 1014, to the PCM certain information such as a PIN ID that may have been previously discovered and authorized by PCS, its own PE-ID, PIN Type, and/or Authorization Information. The PCM may verify whether or not the joining of the PE can be supported, and may do so by considering conditions including the current state of the Application service, available QOS, and/or other available PE. The PCM may also contact PCS to verify the PE ID and/or verify whether the PE is allowed to join. At 1016, if the PE is allowed to join and can be supported, the PCM may respond by sending an approval indication to the PC along with an indication of the result of the request. Examples of an indication of a result of the request may be ALLOWED, BARRED, NOT SUPPORTED, or another result. At 1018, the PCM may update the PCS with the updated PIN information, indicating the new PE that has joined the PIN. At 1020, the PCM may send a configuration update message to the PGM that may include information such as a PIN ID, one or more PE-IDs, and/or one or more allowed QOSs. At 1022, the PCM may update the 3GPP network with PIN Join details. The PIN Join details may include, for example, recreate, update operation, and/or other information.

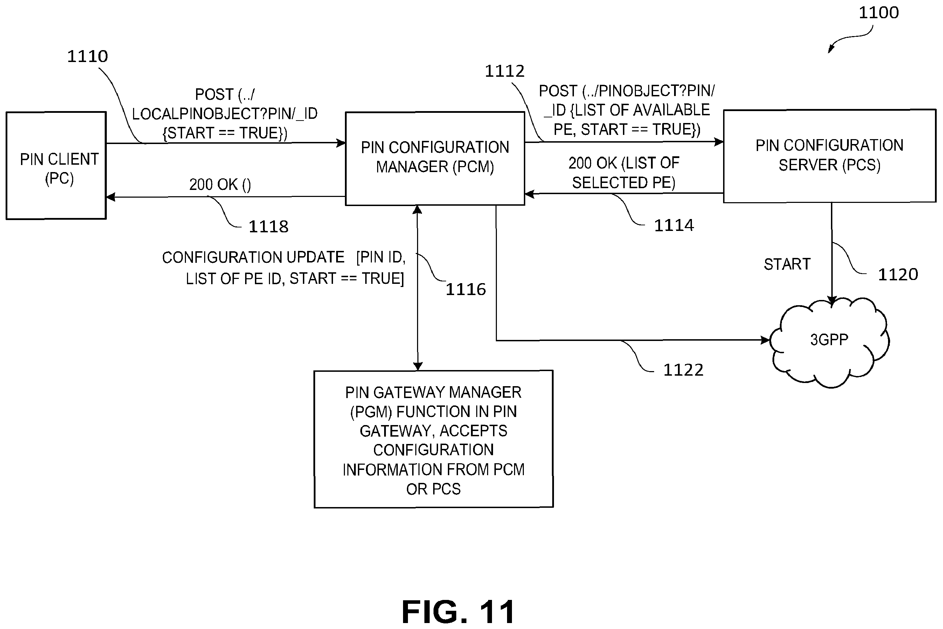

FIG. 11 is flow diagram illustrating an example process 1100 for starting a PIN. After creating or joining a PIN, a user may then start a PIN. PIN creation or join may set the PIN with one or more availabe PE, PEMC and/or PEGW. In an example, a PIN Start may bring the PIN to operational state, with one or more time-based PEs running and available. A user may start the PIN by sending a trigger to the PC. In 1110, a PE with or without PEMC capability may trigger a PIN Start. The start trigger may originate from the PC and be sent to a PCM. The PC may send, at 1110, the start trigger that indicates a PIN ID and set a START indication to TRUE. At 1112, the PCM may send the PIN ID and/or the one or more PE-IDs of the PEs which have joined the PIN to the PCS along with the START request. At 1114, the PCS verifies the PIN ID, the one or more PE-IDs and/or the timer values. The PCS may send, at 1114, an OK indication to the PCM. At 1116, the PCM may send a Configuration Update to the PGM function and may set the state from START to TRUE. At 1118, the PCM may send an OK indication to the PC which requests START. The PCM may also trigger other PEs to go to START state by sending the OK indication (e.g., 200 OK (START == TRUE)) to the other one or more PEs. At 1120 and 1122, the PCS may send a START indication to the 3GPP network to start the PIN. The PCM may, for example, send, at 1122, a START indication to the 3GPP network. The PCS may, for example, send, at 1120, a START indication to the 3GPP network.

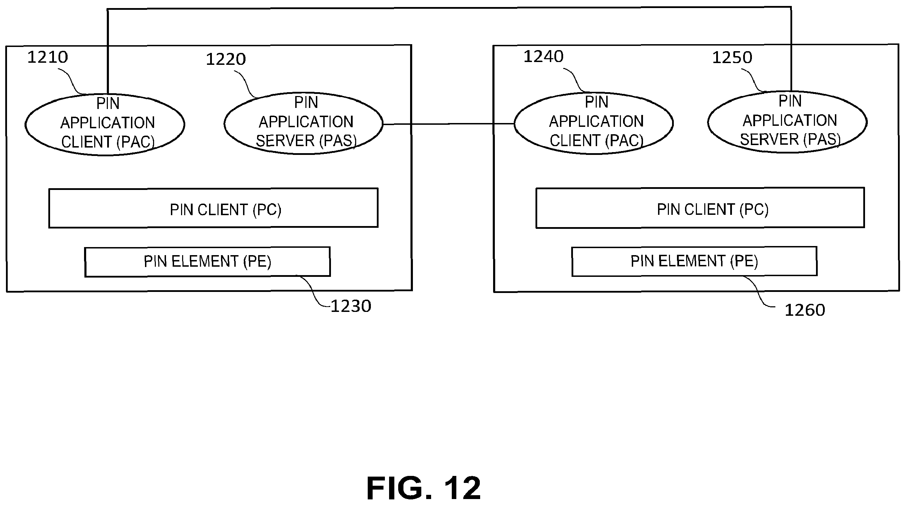

FIG. 12 is a diagram illustrating an example PIN application Client (PAC) 1210 and an example PIN application Server (PAS) 1220. A PE 1230 or 1260 may provide service through a PIN Application Server (PAS) 1220. A PAC 1210 may consume one or more services from one or more other PASs (e.g., such as PAS 1250). The PAC 1210 may discover and/or connect to the other PAS 1250 to consume the one or more services. The PAS 1220 may register and make the PAC 1210 discoverable to one or more other PACs (e.g., such as PAC 1240). The discovery and consumption of the PAS 1220, 1250 may occur locally within a PIN. The discovery and consumption of the PAS 1220, 1250 may occur outside of a PIN such as in another PIN, in a EDN, within 5GS, the Internet, or any other location.

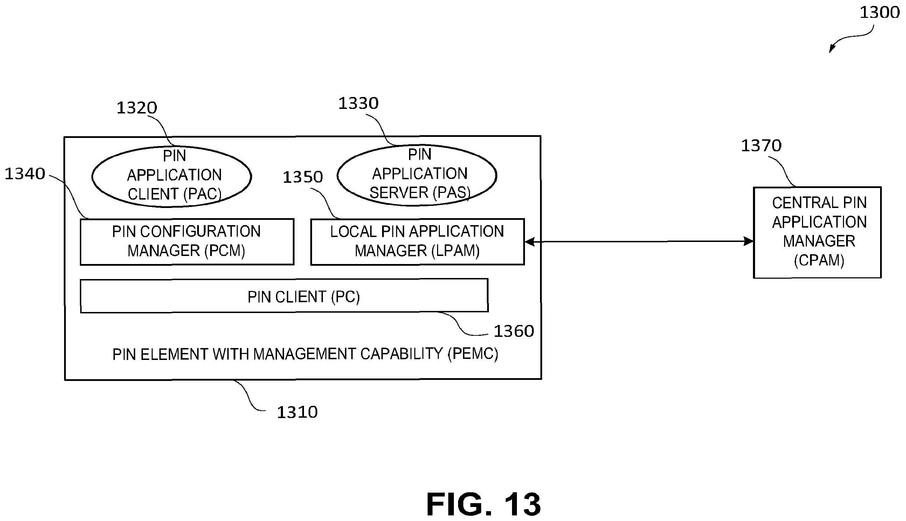

FIG. 13 is an exemplary diagram 1300 illustrating a PIN Element with Management Capability (PEMC) 1310, a PIN Application Client (PAC) 1320, a PIN Application Server (PAS) 1330, a PIN Configuration Manager (PCM) 1340, a Local PIN Application Manager (LPAM) 1350, a PIN Client (PC) 1360, and a Central PIN Application Manager (CPAM) 1370. A Service Registry function may be made available in the context of local PIN to facililate PAS 1330 discoverability. A global PAS 1330 registry may be used for discovery across PIN and in EDN. PIN Local level service registry and management function, for example the LPAM 1350, may occur in the PEMC 1310. Local PIN Application Servers may register services to the LPAM 1350. LPAM 1350 may be hosted in the PEMC 1310. The CPAM 1370 may serve as a global registry of PASs (e.g., such as PAS 1330). The CPAM 1370 may be deployed in the core network (e.g., the 5G CN), such as, for example, in a EDN.

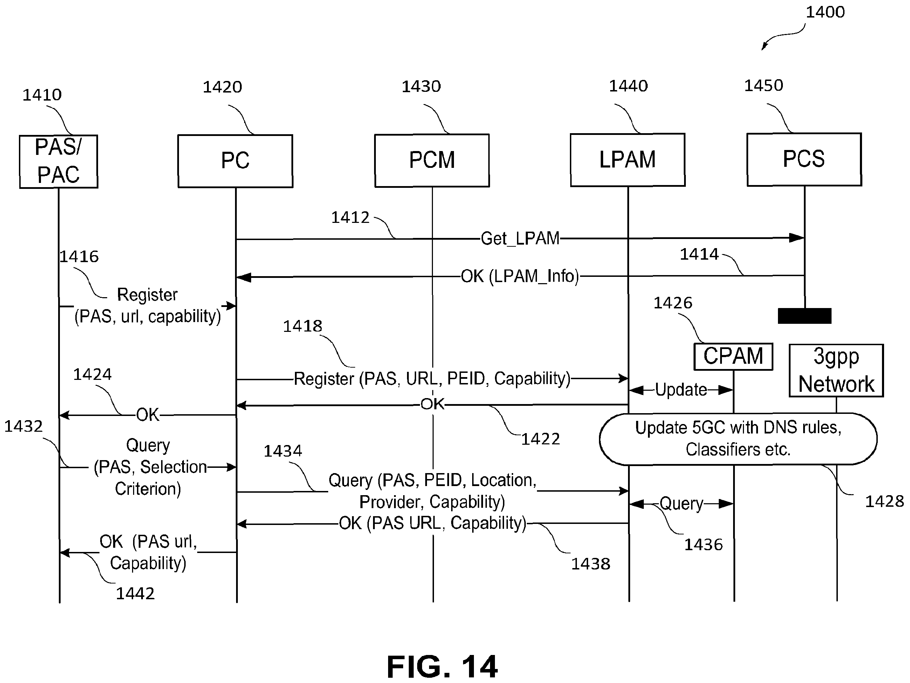

FIG. 14 is a diagram that depicts an example of procedures 1400 involved in PIN Application Server (PAS) registration and discovery. A PIN Client (PC) 1420 in a PE may obtain the Local PIN Application Manager (LPAM) 1440 information from a PIN Configuration Server (PCS) 1450 by sending, at 1412, a Get_Ipam_info message to the PCS 1450. The PCS 1450 may respond, at 1414, with the LPAM 1440 information to the PC 1420. In an example PAS registration procedure, the PAS 1410 may send, at 1416, a Registration Request to PC 1420. With the registration request the PAS 1410 may send, at 1416, an application Server name and details about how to reach the PAS 1410. The PC 1420 may send, at 1418, the Registration Request to the LPAM 1440. The registration request sent, at 1418, may include information such as PAS name, URL, PE-ID, and/or PE-ID Capability. The LPAM 1440 may accept the registration request, may update a Local service registry, and may send, at 1422, an OK message to the PC 1420. The PC 1420 may send, at 1424, an OK message to the PAS 1410. The LPAM 1440 may also update, at 1426, the CPAM with information including the PAS name, URL, PE-ID, and/or Capability. The LPAM 1440 and CPAM 1320 may update, at 1428, the 3GPP network with information including Domain Name System (DNS) rules, classifier information for proper routing or traffic steering towards application servers. In the example query procedure, the query procedure may be initiated, at 1432, by the PAC 1410. The PAC 1410 may send, at 1432, a query message to the PC 1420, which may include a PAS name and/or one or more selection criteria. The query message to PC 1420 may include information such as the PE-ID of the PAS, location, provider, and/or capability. The PC 1420 may send, at 1434, the query message to the LPAM 1440 with details such as, for example, the PAS name, PE-ID, and/or other selection criterion that may include location, capability, and/or provider. The LPAM 1440 may search its registry to find out if the PAS information is available. If not available, the LPAM 1440 may query, at 1436, the CPAM 1320 with same information. After LPAM 1440 finds out the PAS information, the LPAM may respond, at 1438 to the PC 1420 with the PAS information such as a PAS URL, capability, and/or other PAS information. The PC 1420 may send, at 1442, PAS information to the PAC 1410. The PAS information may include, for example, a PAS URL and/or PAS capability.

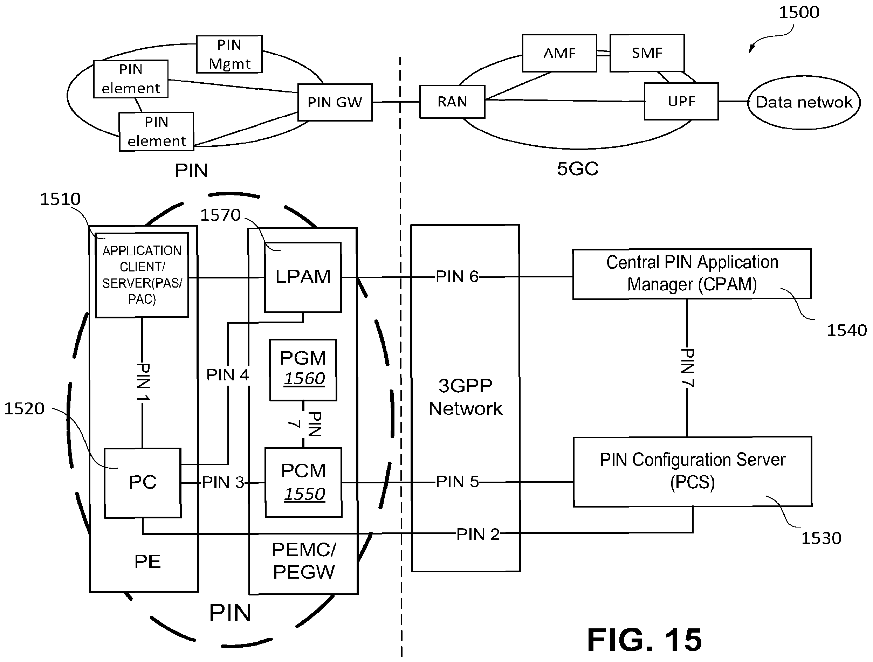

FIG. 15 is an example diagram of a PIN Application Framework Architecture 1500. An example application framework is described based on the Management and Application Server Discovery procedure requirement described earlier. In the example set of interactions for PIN management, PIN 1 may connect the Application Client/Server(PAS/PAC) (ACS) 1510 and the PC 1520. PIN 1ay be a Trigger to Create, Start, and/or Discover the PIN : User Applications, Application client initiates PIN creation, PIN Discovery, and/or PIN Start. PIN 2 may connect the PC 1520 and the PCS 1530. PIN 2 may perform Create and/or Start: the PC 1520, preconfigured with PCS information, may contact the PCS 1530 to create or start a PIN, during which the PCS 1530 may assign a PEID and/or PIN ID. The PCS 1530 may also provide PCM Information to the PC 1520. PIN 2 may also perform Discovery, during which the PC may obtain a PIN ID and/or PCM Information. PIN 3 may connect the PC 1520 and the PCM 1550. For PIN 3, after obtaining PIN ID and PE ID from PCS, the PC 1520 may initiate a Create, Join, and/or Start procedure with the PCM 1550, during which Create PIN, Join PIN, and/or Start PIN are performed. PIN 5 may connect the PCM 1550 and the PCS 1530, which may allow the PCM 1550 to update information to PCS 1530. PIN 5 may perform the processes of Start PIN and/or Get PIN policy information. PIN 7 may connect the PCM 1550 and the PGM 1560, which allows the PCM 1550 to send configuration information to the PGM 1560, for example, to setup one or more PIN paths. PIN 7 may also update PIN ID and/or PE-ID. In an example set of interactions related to PIN Application Service Management, PIN 1 may connect the ACS 1510 and the PC 1520. PIN 1 may perform registration and query to the PC that is intiated by a user application. PIN 1 may perform service registration which involves registration of an application server in the PE. PIN 1 may also perform a query, which may be initiated by an application client in a PE. PIN 2 may connect the PC 1520 and the PCS 1530. PIN 2 may perform the action of Get LPAM information, during which the PC may obtain LPAM (a local registry) information. PIN 4 may connect the PC 1520 and the LPAM 1570. PIN 4 may perform the actions of Register Service and Query for a service. PIN 6 may connect the LPAM 1570 and the CPAM 1540. PIN 6 may perform the actions of Update Registration and Query for a service not found in the LPAM 1570.
Itemized list of examples useful to understand the inventive concept.
Example 1 is a wireless transmit/receive unit (WTRU) comprising a processor and memory, the processor configured to: receive a first message from a local client device in a local network, the first message comprising one or more criteria associated with an application server; determine whether any local application servers in the local network satisfy the one or more criteria; on a condition that one or more local application servers satisfy the one or more criteria, send a second message to the local client device, the second message comprising information for accessing the one or more local application servers in the local network; and on a condition that no local application servers in the local network satisfy the one or more criteria: send a third message to a central application management server, the third message comprising the one or more criteria, receive a fourth message from the central application management server indicating one or more non-local application servers that satisfy the one or more criteria, and send a fifth message to the local client device, wherein the fifth message comprises information for accessing the one or more non-local application servers.

Example 2 is the WTRU of example 1, wherein the local network comprises a personal internet of things (IoT) network (PIN), the one or more local application servers comprises a PIN application server (PAS) in the PIN, the one or more non-local application servers are located outside of the PIN, and the WTRU is configured as a local PIN application manager (LPAM) for the PIN. Example 3 is the WTRU of example 1 or 2, wherein the one or more criteria comprises one or more of a PIN Application Server (PAS) name, PIN element identifier (PE-ID), location information, provider information, or capability information. Example 4 is the WTRU of any of examples 1 to 3, wherein the first message comprises information associated with a registration request. Example 5 is the WTRU of example 4, wherein the information associated with the registration request comprises one or more of a personal internet of things (IoT) network (PIN) application server (PAS) name, a uniform resource locator (URL), a PIN element identifier (PE-ID), or capability information. Example 6 is the WTRU of example 4 or 5, wherein the processor is further configured to: accept the registration request; and send an update message to the central application management server, the update message comprising the information associated with the registration request. Example 7 is the WTRU of example 6, wherein the processor is further configured to send a registration accept message to the local client device in response to the acceptance of the registration request. Example 8 is the WTRU of example 6 or 7, wherein the processor is further configured to update the network in response to acceptance of the registration request, the update indicating one or more Domain Name System (DNS) rules or classifier information associated with routing traffic to the one or more local application servers. Example 9 is the WTRU of any of examples 1 to 8, wherein the information for accessing the one or more local or non-local application servers comprises one or more of a personal internet of things (IoT) network (PIN) application server (PAS) uniform resource locator (URL) or a PAS capability. Example 10 is the WTRU of example 1, wherein the processor is further configured to: send a sixth message to a personal internet of things (IoT) network (PIN) configuration server (PCS) comprising information associated with creating a PIN, wherein the PIN is associated with the one or more local application servers; receive a seventh message from the PCS comprising a PIN identifier (PIN ID) and a PIN element identifier (PE-ID); send a eighth message to a PIN configuration manager (PCM) requesting to create a PIN, wherein the eighth message to the PCM comprises one or more of PIN ID, PE-ID, PIN type and authorization information; and receive a ninth message comprising PIN ID and supported application services in response to the eighth message.

Example 11 is a method implemented by a Wireless Transmit/Receive Unit (WTRU), the method comprising: receiving a first message from a local client device in a local network, the first message comprising one or more criteria associated with an application server; determining whether any local application servers in the local network satisfy the one or more criteria; on a condition that one or more local application servers satisfy the one or more criteria, sending a second message to the local client device, the second message comprising information for accessing the one or more local application servers in the local network; and on a condition that no local application servers in the local network satisfy the one or more criteria: sending a third message to a central application management server, the third message comprising the one or more criteria, receiving a fourth message from the central application management server indicating one or more non-local application servers that satisfy the one or more criteria, and sending a fifth message to the local client device, wherein the fifth message comprises information for accessing the one or more non-local application servers. Example 12 is the method of example 11, wherein the local network comprises a personal internet of things (IoT) network (PIN), the one or more local application servers comprises a PIN application server (PAS) in the PIN, the one or more non-local application servers are located outside of the PIN, and the WTRU is configured as a local PIN application manager (LPAM) for the PIN. Example 13 is the method of example 11 or 12, wherein the one or more criteria comprises one or more of a PIN Application Server (PAS) name, PIN element identifier (PE-ID), location information, provider information, or capability information. Example 14 is the method of any of examples 11 to 13, wherein the first message comprises information associated with a registration request. Example 15 is the method of example 14, wherein the information associated with the registration request comprises one or more of a personal internet of things (IoT) network (PIN) application server (PAS) name, a uniform resource locator (URL), a PIN element identifier (PE-ID), or capability information. Example 16 is the method of example 14 or 15, further comprising: accepting the registration request; and sending an update message to the central application management server, the update message comprising the information associated with the registration request. Example 17 is the method of example 16, further comprising sending a registration accept message to the local client device in response to the acceptance of the registration request. Example 18 is the method of example 16 or 17, further comprising updating the network in response to acceptance of the registration request, wherein updating the network comprises indicating one or more Domain Name System (DNS) rules or classifier information associated with routing traffic to the one or more local application servers. Example 19 is the method of any of examples 11 to 18, wherein the information for accessing the one or more local or non-local application servers comprises one or more of a personal internet of things (IoT) network (PIN) application server (PAS) uniform resource locator (URL) or a PAS capability. Example 20 is the method of example 11, further comprising: sending a sixth message to a personal internet of things (IoT) network (PIN) configuration server (PCS) comprising information associated with creating a PIN, wherein the PIN is associated with the one or more local application servers; receiving a seventh message from the PCS comprising a PIN identifier (PIN ID) and a PIN element identifier (PE-ID); sending an eighth message to a PIN configuration manager (PCM) requesting to create a PIN, wherein the eighth message to the PCM comprises one or more of PIN ID, PE-ID, PIN type and authorization information; and receiving a ninth message comprising PIN ID and supported application services in response to the eighth message.

## Claims

1. A first wireless transmit/receive unit (WTRU) comprising:
a processor configured to:
receive a join request from a personal internet of things (IoT) network (PIN) element, wherein the join request indicates a request to join a PIN associated with the first WTRU, and wherein the join request indicates a PIN identifier, a PIN element identifier, and authorization information;
when the PIN element is authorized to join the PIN, send an approval indication to the PIN element;
send, to a PIN server, a first message that indicates PIN information to indicate that the PIN element has joined the PIN; and
send, to a second WTRU, a second message to inform the second WTRU about the PIN element joining the PIN, the second message indicating the PIN element identifier.

2. The first WTRU of claim 1, wherein the second message indicates one or more allowed Quality of Service (QoS).

3. The first WTRU of claims 1 or 2, wherein the processor is further configured to determine whether the PIN element is authorized to join the PIN.

4. The first WTRU of claim 3, wherein the determination of whether the PIN element is authorized to join the PIN is based on one or more of available QoS or other available PIN elements.

5. The first WTRU of claim 3, wherein the determination of whether the PIN element is authorized to join the PIN comprises the processor being configured to verify with the PIN server whether the PIN element can join the PIN.

6. The first WTRU of any of claims 1 to 5, wherein the second message is a configuration update message.

7. The first WTRU of any of claims 1 to 6, wherein the authorization information comprises security information of the PIN element.

8. A method performed by a first wireless transmit/receive unit (WTRU), the method comprising:
receiving a join request from a personal internet of things (IoT) network (PIN) element, wherein the join request indicates a request to join a PIN associated with the first WTRU, and wherein the join request indicates a PIN identifier, a PIN element identifier, and authorization information;
when the PIN element is authorized to join the PIN, sending an approval indication to the PIN element;
sending, to a PIN server, a first message that indicates PIN information to indicate that the PIN element has joined the PIN; and
sending, to a second WTRU, a second message to inform the second WTRU about the PIN element joining the PIN, the second message indicating the PIN element identifier.

9. The method of claim 8, wherein the second message indicates one or more allowed Quality of Service (QoS).

10. The method of claims 8 or 9, further comprising determining whether the PIN element is authorized to join the PIN.

11. The method of claim 10, wherein the determination of whether the PIN element is authorized to join the PIN is based on one or more of available QoS or other available PIN elements.

12. The method of claim 10, wherein the determination of whether the PIN element is authorized to join the PIN comprises verifying with the PIN server whether the PIN element can join the PIN.

13. The method of any of claims 8 to 12, wherein the second message is a configuration update message.

14. The method of any of claims 8 to 13, wherein the authorization information comprises security information of the PIN element.
